# EUROPÄISCHE PATENTSCHRIFT

(11) **EP 1 505 842 B1**
(45) Veröffentlichungstag und Bekanntmachung des Hinweises auf die Patenterteilung: **20.09.2006**
(21) Anmeldenummer: 04103572.6
(22) Anmeldetag: 26.07.2004
(51) Int. Cl.: H04Q 3/00

(54) **Verfahren zum Umsteuern einer Bearerverbindung (Bearer Redirect) für SIP/ SIP-T Teilnehmer**
Method for bearer redirection for SIP/SIP-T users
Méthode pour la redirection de porteurs pour des utilisateurs SIP/SIP-T

(30) Priorität: 31.07.2003 DE 10335149
(43) Veröffentlichungstag der Anmeldung: 09.02.2005
(73) Patentinhaber: SIEMENS AKTIENGESELLSCHAFT, 80333 München (DE)
(72) Erfinder: Hoffmann, Klaus, 81735, München (DE); Pauls, Markus, 81476, München (DE)

(56) Entgegenhaltungen:
- SCHULZRINNE H ET AL: "Signaling for Internet telephony" NETWORK PROTOCOLS, 1998. PROCEEDINGS. SIXTH INTERNATIONAL CONFERENCE ON AUSTIN, TX, USA 13-16 OCT. 1998, LOS ALAMITOS, CA, USA,IEEE COMPUT. SOC, US, 13. Oktober 1998 (1998-10-13), Seiten 298-307, XP010309377 ISBN: 0-8186-8988-9
- "Call diversion supplementary services fo H.323; ITU-T Recommendation H.450.3" ITU-T RECOMMENDATION H.450.3, Februar 1998 (1998-02), Seiten 1-68, XP002212219

## Beschreibung

Die Erfindung betrifft ein Verfahren gemäß dem Oberbegriff von Patentanspruch 1.

Neuere Kommunikationsarchitekturen sehen die Trennung vermittlungstechnischer Netzwerke in verbindungsdienstbezogene Einheiten und den Transport der Nutzinformationen (Bearer Control) vor. Hieraus resultiert eine Dekomposition/ Trennung von Verbindungsaufbau und Medium-bzw. Beareraufbau. Die Übertragung der Nutzinformationen (Durchschaltung des Nutzkanals) kann dabei über unterschiedliche hochbitratige Transporttechnologien wie z.B. ATM, IP oder Frame Relay vorgenommen werden.

Mit einer derartigen Trennung sind die gegenwärtig in Schmalbandnetzen geführten Telekommunikationsdienste auch in Breitbandnetzen zu realisieren. Dabei werden die Teilnehmer entweder direkt (z.B. über ein DSS1-Protokoll) oder über als Media Gateway Controller (MGC) ausgebildete Vermittlungsstellen (z. B. über das ISUP-Protokoll) angeschlossen. Die Nutzinformationen selbst werden über von Media Gateways (MG) in die jeweils benutzte Transporttechnologie umgewandelt.

Die Steuerung der Media Gateways werden von jeweils zugeordneten Media Gateway Controllern (MGC) durchgeführt. Zur Steuerung der Media Gateways verwenden die Media Gateway Controller normierte Protokolle, wie z. B. das MGCP Protokoll oder das H.248 Protokoll. Zur Kommunikation untereinander verwenden die Media Gateway Controller ein durch die ITU standardisiertes BICC (Bearer Independent Call Control) Protokoll, das aus einer Mehrzahl von standardisierten Protokollen gebildet ist und somit eine Protokollfamilie umfasst.

Da das BICC Protokoll eine Weiterentwicklung eines ISUP Protokolls darstellt, werden die hierzu relevanten Anteile in einem gesonderten Teil zusammengefasst, der als Q.1902.x BICC CS2 Protokoll (bearer independent call control capability set 2, mit einem eigenen service indicator beim MTP (message transfer part)) bezeichnet wird. Die rein spezifischen für die Kommunikation zwischen Media Gateway Controllern relevanten Anteile sind in einem weiteren Teil niedergelegt, der als Q.765.5 BAT (bearer application transport) bezeichnet wird. Dieses ITU-T Standard Protokoll beschreibt auch für IP bearer RTP als Bearer Technologie. Als Konsequenz wird für die Übertragung durch das ATM bzw. IP Netz eine Trennung zwischen Signalisierungsinformation und Nutzinformation vollzogen, wodurch dem Endkunden seine gewohnten Dienste im Telekommunikationsnetz bereitgestellt sind.

Ein dem BICC Protokoll adäquates Protokoll ist bei dem IETF Standardisierungsgremium mit dem RFC 3204 Protokoll (= SIP-T Protokoll) entstanden. Dieses stellt einen Zusatz zum SIP Protokoll (RFC 3261) dar. Mit Hilfe des SIP-T Protokolls können ISUP-Nachrichten - im Gegensatz zum SIP Protokoll - übertragen werden. Die Übertragung der ISUP-Nachrichten erfolgt im allgemeinen durch Tunneln, d.h. durch transparentes Durchreichen. Vorzugsweise werden die von einem PSTN-Teilnehmer abgegebenen ISUP-Nachrichten zusammen mit einer Trägernachricht geführt (INFO Methode, RFC 2976) und dem empfangenden PSTN-Teilnehmer zugeführt.

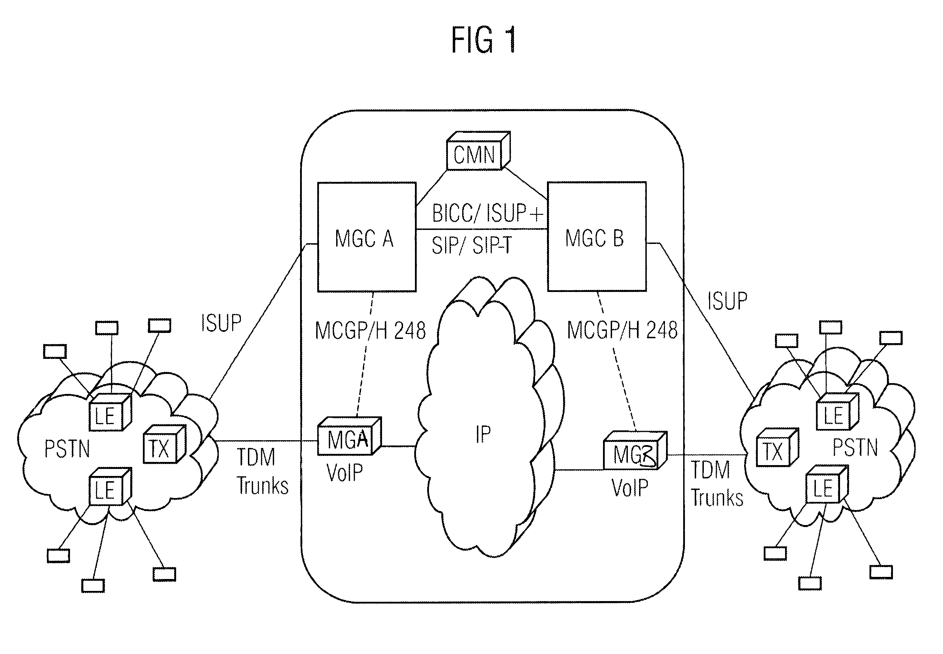

In Fig. 1 ist eine allgemeine Netzkonfiguration gemäß dem Stand der Technik mit TDM -/ IP Netzen aufgezeigt. Hierbei sind beispielhaft 2 PSTN-Netze offenbart, in denen jeweils eine Mehrzahl von PSTN-Teilnehmern in bekannter Weise angeordnet sind. Diese sind an Ortsvermittlungsstellen LE herangeführt, die ihrerseits mit Transit-Vermittlungsstellen TX verbunden sind.

In den Transit-Vermittlungsstellen TX wird nun die Trennung zwischen Signalisierungsinformationen und Nutzinformationen durchgeführt. Die Signalisierungsinformationen werden von der Transit-Vermittlungsstelle TX unmittelbar über ein ISUP- Protokoll einem jeweils zugeordneten Media Gateway Controller MGC (MGC A oder MGC B) zugeführt. Die Nutzinformationen werden zu einem (eingangsseitig angeordneten) Media Gateway MG (MG A oder MG B) übertragen, das als Schnittstelle zwischen TDM-Netz und einem ATM- bzw. IP- Übertragungsnetz fungiert, wo sie über das betreffende Übertragungsnetz (ATM bzw. IP) paketorientiert übertragen werden. Das Media Gateway MG A wird von dem Media Gateway Controller MGC A ebenso gesteuert, wie das Media Gateway MG B vom Media Gateway Controller MGC B. Im Falle einer Übertragung der Nutzinformationen vom Media Gateway MG A zum Media Gateway MG B werden die Nutzinformationen wieder unter Steuerung des dem Media Gateway MG B zugeordneten Media Gateway Controllers MGC B in einen TDM Datenstrom umgewandelt und dem in Frage kommenden PSTN-Teilnehmer zugeführt werden.

Die zwischen dem Media Gateway Controller MGC und dem jeweils zugeordneten Media Gateway übertragenen Daten werden von einem standardisierten Protokoll unterstützt. Dieses kann beispielsweise das MGCP oder das H.248 Protokoll sein. Zwischen den beiden Media Gateway Controllern MGC A, MGC B kann als weiteres standardisiertes Protokoll ein BICC Protokoll, ein SIP- oder SIP-T Protokoll vorgesehen sein. Zwischen beiden Media Gateway Controllern können noch weitere Einrichtungen wie Proxies geschaltet sein.

Grundsätzlich ist es wünschenswert, dass verschiedene aus der TDM Welt bekannten Leistungsmerkmale auch in der IP Welt verwendet werden können. Als Beispiel hierfür sei das Leistungsmerkmal "Anrufweiterschaltung", "Call Transfer", "Queuing", oder "Sequencing" angesprochen. Bei allen diesen Leistungsmerkmalen ist ein Umsteuern der Bearerverbindung erforderlich. Dies bedeutet, dass eine zwischen zwei SIP/ SIP-T Steuereinheiten bestehende Bearerverbindung auf eine dritte SIP/SIP-T Steuereinheit umgesteuert werden muss. Zwar erlauben die bei der ITU/ IETF standardisierten Prozesse das Umsteuern einer Bearerverbindung zu einer dritten SIP/ SIP-T Steuereinheit, falls der Call angenommen worden ist (Talk Zustand). In diesem Fall kann durch die SIP/ SIP-T Nachricht RE-INVITE dieser Prozess gesteuert werden.

Ein Beispiel ist aus dem Dokument XP010309377 "Signalling for Internet Telephony", Schulzrinne et al. bekannt.

Falls jedoch die Bearer Endpunktdaten im Zuge des Call Aufbaus bereits ausgetauscht worden sind, der Call aber noch nicht beantwortet worden ist (Ringing Zustand), ist ein Umsteuern der Bearerverbindung nicht möglich. Dies hat seinen Grund darin, dass die erforderliche Steuernachricht RE-INVITE nur im Talk Zustand zugelassen ist und hier verwendet werden kann, im Ringing Zustand aber nicht zugelassen ist.

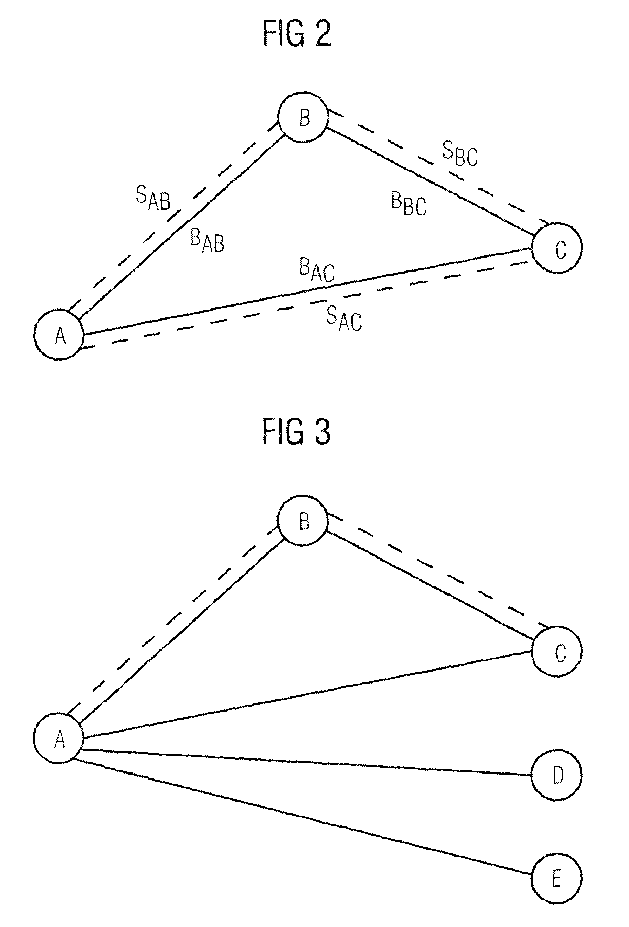

Zur besseren Veranschaulichung dieser Verhältnisse sei auf Fig. 2 verwiesen, wo die grundlegenden Verhältnisse am Beispiel des Leistungsmerkmals "Call Transfer" im IP Netz aufgezeigt sind. Demgemäß ist eine Konfiguration mit SIP/ SIP-T Steuereinheiten aufgezeigt, die untereinander Kommunikationsbeziehungen pflegen. Beispielhaft zeigt Fig. 2 drei SIP/ SIP-T Steuereinheiten, die als Teilnehmerendgeräte oder Teilnehmer A, B und C ausgebildet sind. Wie bereits in Zusammenhang mit Fig. 1 beschrieben, werden über das Internet IP die Informationen des Nutzkanals (Bearerverbindung) und diejenigen des Signalisierungskanals getrennt geführt. Insgesamt sind jeweils 3 Nutzkanäle B_{AB}, B_{BC} und B_{AC} aufgezeigt, die Informationen zwischen den betreffenden Teilnehmern A, B, C austauschen. Die Signalisierungsinformationen werden über den Nutzkanälen zugeordnete Signalisierungsverbindungen S_{AB}, S_{BC}, S_{AC} geführt, die Fig. 2 gestrichelt entnehmbar sind.

Im Folgenden wird nun davon ausgegangen, dass Teilnehmer B einen von A ankommenden Ruf zu Teilnehmer C transferieren soll (Call Transfer). Demgemäß hatte zunächst Teilnehmer A einen Verbindungswunsch Teilnehmer an B signalisiert. Mit Hilfe des Signalisierungskanals S_{AB} war eine Nutzkanalverbindung (Bearerverbindung) B_{AB} mit Hilfe des SIP/ SIP-T-Protokolls aufgebaut worden. Dem Teilnehmer B wurde der ankommende Verbindungswunsch des Teilnehmers A z. B. durch ein Klingel-Zeichen (Alerting-Zeichen) mitgeteilt. Solange das Klingel-Zeichen aktiviert blieb, befanden sich beide Teilnehmer A, B im Ringing Zustand. Die Dauer des Ringing Zustandes dauerte solange, bis B abgehoben (Annahme des Verbindungswunsches) hatte.

Nach Annahme des Verbindungswunsches durch B befinden sich nun beide Teilnehmer A und B im Talk Zustand und können Informationen austauschen. Teilnehmer B möchte nun A, mit einem weiteren Teilnehmer C sprechen zu lassen. Teilnehmer B setzt daher seinerseits über die Signalisierungsverbindung S_{BC} mit Hilfe des SIP/ SIP-T-Protokolls einen Verbindungswunsch zu Teilnehmer C ab. Bei Annahme des Rufes von Teilnehmer C wird die Nutzkanalverbindung B_{BC} zwischen B und C erstellt, B kann somit mit C kommunizieren. Teilnehmer B teilt C mit, dass A eine Kommunikationsbeziehung zu C wünscht. Hierzu wird die IP Portadresse sowie gegebenenfalls Codec-Informationen von C an B mitgeteilt (RE-INVITE), der diese unmittelbar A zukommen lässt (RE-INVITE). Damit kann nun eine direkte Nutzkanalverbindung B_{AC} zwischen A und C geschaltet werden. Während die beiden Nutzkanalverbindungen B_{AB} und B_{BC} ausgelöst werden können, bleiben die beiden Signalisierungsverbindungen S_{AB}, S_{BC} erhalten, eine direkte zusätzliche Signalisierungsverbindung S_{AC} braucht nicht erstellt zu werden.

Solange vom Teilnehmer C der Ruf von B nicht angenommen wird, befindet sich die Kommunikationsbeziehung zwischen Teilnehmer B und C im Ringing Zustand. Da die Zeitspanne durchaus länger andauern kann, besteht das Problem, dass unnütze Zeit verstreicht und das Netz unnötig lange belastet wird. Ein Weiterleiten im Ringing Zustand ist aber nicht möglich, da die RE-INVITE Nachricht im Ringing Zustand nicht zugelassen ist.

Gleiches gilt für die Leistungsmerkmale "Queueing", oder "Sequencing".

Der Erfindung liegt die Aufgabe zugrunde, einen Weg aufzuzeigen, wie das Umsteuern einer Bearerverbindung auch im Ringing Zustand gesteuert werden kann.

Die Erfindung wird ausgehend von den im Oberbegriff von Patentanspruch 1 angegebenen Merkmalen durch die im kennzeichnenden Teil beanspruchten Merkmale gelöst.

Der Vorteil der Erfindung ist darin zu sehen, dass C-seitige SIP/ SIP-T Steuereinheiten von beliebigen Steuereinheiten, die den Call Transfer im Ringing Zustand durchführen, erreicht werden. Hierbei kann es aus Gebührensicht erforderlich sein, dass für den B-Teilnehmer der Nachweis für die Dauer des Gesprächs erbracht werden soll. Dies bedeutet, dass eine Softwareinstanz zugehörig zum B-Teilnehmer im Signalisierungspfad (Call signalling path) bleiben muss, um dies zu bewerkstelligen. Hierbei könnte es z. B. sein dass der B-Teilnehmer noch ein paar Worte mit C wechseln will, bevor er den Transfer wirklich anstößt. Es ist jedoch auch möglich, dass der C-Teilnehmer nicht sofort abhebt und es dem B-Teilnehmer zu lange dauert, und er deshalb den Transfer bereits im Ringing State durchführt. Ferner werden mit der vorgeschlagenen Lösung SIP/ SIP-T Teilnehmer der vollständige Call Transfer Dienst angeboten.

Ein weiterer Vorteil der Erfindung ist darin zu sehen, dass es A-seitigen SIP Teilnehmern genauso wie den heutigen PSTN oder Mobilfunk Teilnehmern gestattet wird, das Hören von unterschiedlichen Ansagensequenzen und das Eingeben von Nutzdaten (PIN, etc) auch für gebührenfreie Dienste, bei welchen der endgültige B-seitige Teilnehmer sich noch nicht gemeldet hat vorzunehmen. Dies ist von besonderer Bedeutung, weil mit dem Senden von Answer (Teilnehmer hat sich gemeldet) gemäß heutigen Standards der endgültige ISDN/ POTS Featureumfang ausgehandelt wird und die Vergebührung gestartet wird, und Einschränkungen durch das vorzeitige Senden einer künstlichen Answer entstehen.

Die Erfindung wird im folgenden anhand eines figürlich dargestellten Ausführungsbeispiels näher erläutert.

Es zeigen:
- Figur 1: die grundsätzlichen Verhältnisse zwischen 2 PSTN-Teilnehmern, zwischen denen ein Internetnetz angeordnet ist,
- Figur 2: die grundsätzlichen Verhältnisse zwischen 3 SIP/SIP-T Steuereinheiten in einem Internetnetz IP
- Figur 3: die grundsätzlichen Verhältnisse zwischen 5 SIP/SIP-T Steuereinheiten in einem Internetnetz IP

Gemäß Fig. 2 sei die Erfindung anhand eines ersten Ausführungsbeispiels näher erläutert. Hierbei wird das Umsteuern einer Bearerverbindung anhand des Leistungsmerkmales "Call Transfer" beschrieben. Die SIP/ SIP-T Steuereinheiten A, B, C sind als SIP/ SIP-T Teilnehmer A, B, C ausgebildet.

Bei Anwendung der folgenden Erweiterung des SIP/ SIP-T Protokolls kann dem transferierenden Teilnehmer (hier B) ein Transfer zum Teilnehmer C im Ringing Zustand angeboten werden. Dies erfolgt durch Einführung eines neuen Headers in den SIP/ SIP-T Steuernachrichten UPDATE oder PRACK (hier in vorwärts Richtung zu senden).

| | | | | | | | | | | |
|---|---|---|---|---|---|---|---|---|---|---|
| | where | enc. | e-e | ACK | BYE | CAN | INV | OPT | REG | new |
| SDP offer request | | | h | - | - | - | | - | - | m |

Mit diesem "SDP offer request" header wird die Partner SIP Seite aufgefordert ein neues SDP offer zu senden. Gemäß vorliegendem Ausführungsbeispiel soll dann der SIP Partner in der SIP Methode UPDATE sein SDP offer anbieten. Daraufhin kann dann die anfordernde SIP Seite in der 200 OK die SDP Answer zurückgeben. Zur vollen Unterstützung der Codec Verhandlung zwischen den Teilnehmern A und C ist es eine Aufgabe der Logik am Umlenkpunkt, die Inhalte der beiden empfangenen SDP's zu untersuchen, die gemeinsamen CODEC's zu erkennen, und in den zu sendenden beiden SDP Answer's gemeinsame CODEC's auszuwählen.

In der unten aufgeführten Tabelle 1 ist der Austausch der SIP/ SIP-T Nachrichten aus Sicht von B gemäß der Erfindung aufgezeigt. Hierzu wird davon ausgegangen, dass ein von einem Teilnehmer A kommender Ruf von einem Teilnehmer B zu einem Teilnehmer C weitergeleitet werden soll. Ferner wird davon ausgegangen, dass Teilnehmer C den Ruf des Teilnehmers B nicht - oder nicht sofort - annimmt, und somit eine Rufweiterleitung mit Hilfe der Nachricht RE-INVITE während des Ringing Zustandes nicht in Frage kommt.

Zum einen wird also zunächst vom Teilnehmer B über das SIP/SIP-T Protokoll mit einem entsprechenden Parameter (Header) "SDP Offer request" ein SDP offer vom Teilnehmer C angefordert. Dies erfolgt auf Erkennen der Notwendigkeit der Umsteuerung durch den Teilnehmer B hin. Der Teilnehmer C quittiert die Anforderung mit einer 200 OK Antwort. Dies gilt natürlich nur, wenn der Teilnehmer C das neue Leistungsmerkmal unterstützt. Nach Quittierung übergibt der Teilnehmer C dem Teilnehmer B seine IP Portadresse sowie Codec-Informationen. Diese Informationen werden über das SIP/ SIP-T-Protokoll (Session Initiation Protocol) übertragen. Als Träger der Information kann die UPDATE- Methode verwendet werden.

Zum anderen wird gleichzeitig der A-Teilnehmer mit einer RE-INVITE (ohne SDP) aufgefordert, sein SDP offer anzubieten.

Der A-Teilnehmer gibt dann protokollgemäß sein SDP offer mit der 200 OK auf die RE-INVITE dem B-Teilnehmer. Die erhaltene IP Portadresse/ Codec-Informationen wird dem ursprünglich rufenden Teilnehmer A von B mit Hilfe der ACK Methode (A und B sind im Talk Zustand) zugeführt. Die erhaltene IP Portadresse/ Codec-Informationen wird dem Teilnehmer C von B mit Hilfe der 200 OK als Antwort auf die UPDATE Methode (B und C sind im Ringing Zustand) zugeführt. Es ist eine Aufgabe der Logik am Umlenkpunkt, die Inhalte der beiden empfangenen SDP's zu untersuchen, die gemeinsamen CODEC's zu erkennen, und in den zu sendenden beiden SDP Answer's gemeinsame CODEC's auszuwählen. Im folgenden kann nun eine Bearerverbindung direkt zwischen Teilnehmer A und Teilnehmer C geschaltet werden, da beide Teilnehmer nun Kenntnis über die IP Portadresse sowie Codec-Informationen der jeweils anderen Seite haben. Teilnehmer B ist dann damit aus der Bearerverbindung ausgeklinkt, die Signalisierungsverbindung von A nach B und C ist aber nach wie vor aktiv geschaltet.

**Tabelle 1**

| SIP/SIP-T | |
|---|---|
| new SIP offer request Header | Notwendigkeit der Umsteuerung erkannt |
| 200 OK Antwort auf die obigen Methode | Andere Seite unterstützt das neue Feature |
| UPDATE/PRACK with SDP offer | IP Adresse und IP Port der C-Seite erhalten |
| 200 OK to UPDATE/PRACK with SDP answer | IP Adresse und IP Port der C- seitigen Resource wird der A-Seite zur Verfügung gestellt. |

Gemäß der unten aufgeführten Tabelle 2 ist eine Weiterbildung des erfindungsgemäßen Verfahrens aufzeigt. Bei vorliegendem Ausführungsbeispiel wurde davon ausgegangen, dass beispielsweise Teilnehmer A eine direkte SIP/SIP-T Verbindung zum Teilnehmer B aufbauen kann. In der Praxis ist dies jedoch nicht immer der Fall. So können beispielsweise zwei Transitknoten (Intermedium Node) zwischen den Teilnehmern A und B angeordnet sein. Zwischen den beiden Transitknoten kommt aber unter Umständen das BICC-Protokoll zur Anwendung. Dies bedeutet, dass ein Mapping der entsprechenden Anteile des SIP/SIP-T Protokolls auf das BICC-Protokoll vorzunehmen sind.

**Tabelle 2**

| SIP/SIP-T | BICC (entsprechend der Q.1902.6, bearer redi- | SIP/SIP-T |
|---|---|---|
| → new SIP offer request Header | → APM Action Indicator: "Bearer Redirect" Bearer Redirect Indicators "Redirect Forwards Request" + "Redirect Bearer Release Complete" | → new SIP offer request Header |
| ← 200 OK Antwort auf die obigen Methode | Kein Mapping erforderlich | ← 200 OK Antwort auf die obigen Methode |
| ← UPDATE with SDP offer | ← APM Action Indicator: "Bearer Redirect"- Bearer Redirect Indicators: "Redirect Bearer Connected Indication" IP Address of A Side | ← UPDATE with SDP offer |
| → 200 OK to UPDATE with SDP answer | → APM- Action Indicator "Connect Forward + Notification + selected Codec" IP Address of B Side | → 200 OK to UPDATE with SDP answer |
| | ← APM - Action Indicator "Connected" | |

Letztlich zeigt Tabelle 3 eine Zusammenfassung der erfindungsgemäßen Abläufe aus der Sicht des Umlenkpunktes, der beim Teilnehmer B angeordnet ist.

**Tabelle 3**

| SIP/SIP-T zur B-Seite(Seite hat sich schon gemeldet) | BICC (entsprechend der Q.1902.6, bearer redirection Prozedur) | Logik am Umlenkpunkt | BICC (entsprechend der Q.1902.6, bearer redirection Prozedur) | SIP/SIP-T zur C Seite |
|---|---|---|---|---|
| ← RE-INVITE ohne SDP offer | ← APM Action Indica-tor: "Bearer Redirect" Bearer Redirect Indicators "Redirect Forwards Request" + "Redirect Bearer Release Complete" | Stößt das Umsteuern nach beiden Seiten an. | → APM Action Indica-tor: "Bearer Redirect" Bearer Redirect Indicators "Redirect Forwards Request" + "Redirect Bearer Release Complete" | → new SIP offer request Header |
| | Kein Mapping erforderlich | | Kein Mapping erforderlich | ← 200 OK Antwort auf die obige Methode |
| → 200 OK Antwort auf die RE-INVITE with SDP offer B seite | → APM Action Indicator: "Bearer Redirect" - Bearer Redirect Indicators: "Redirect Bearer Connected Indication" IP Address of A Side | Hier muss gewartet und gespeichert werden. Auch C könnte schneller geantwortet haben. Dann dreht sich die Reihenfolge der nachfolgenden Nachrichten um. | | |
| | | Es ist eine Aufgabe der Logik am Umlenkpunkt,die Inhalte der beiden empfangenen SDP's zu untersuchen, die gemeinsamen CODEC's zu erkennen, und in den zu sendenden beiden SDP Answer's gemeinsamen CODEC auszuwählen. | ← APM Action Indicator: "Bearer Redirect" - Bearer Redirect Indi-cators: "Redirect Bearer Connected Indication" IP Address of A Side | ← UPDATE/PRA CK with SDP offer C Seite |
| ← ACK auf die 200 OK (zur re-INVITE) with SDP answer of C Side | ← APM - Action Indicator "Connect Forward + Notification + selected Codec"IP Address of C Side | | | |
| | | | → APM - Action Indicator "Connect Forward + Notification + selected Codec" IP Address of B Side | → 200 OK to UPDATE/PRA CK with SDP answer of B side |
| | ← APM - Action Indicator "Connected" | | ← APM - Action Indicator "Connected" | |

Damit sind die beiden Teilnehmer auch auf der RTP Bearer Ebene verbunden. Es ist zu beachten, dass der transferierende Teilnehmer ein beliebiger TDMless Teilnehmer sein kann.

In Fig. 3 wird ein zweites Ausführungsbeispiel erläutert. Hierbei wird das Umsteuern einer Bearerverbindung anhand der Leistungsmerkmale "Queueing", oder "Sequencing" beschrieben. Die SIP/ SIP-T Steuereinheit A soll hier einen SIP/ SIP-T Teilnehmer A darstellen, von dem ein Verbindungswunsch ausgeht. Ferner sind SIP/ SIP-T Steuereinheiten B, C, D, E aufgezeigt, die gemäß vorliegendem Ausführungsbeispiel als IN-Dienst wie beispielsweise Ansagendienste ausgebildet sind. In bestimmten Fällen müssen mehrere Ansagen hintereinander in der richtigen Reihenfolge zum Ablauf gelangen, bevor der gewünschte Teilnehmer erreicht wird. Hierzu ist es erforderlich, die Bearerverbindung, die ursprünglich vom Teilnehmer A zur SIP/ SIP-T Steuereinheit B (Ansagebox B) bestanden hat, in einer ganz bestimmten Reihenfolge auf die SIP/ SIP-T Steuereinheiten C, D, E (Ansageboxen C, D) umzusteuern, um schließlich den SIP/ SIP-T Teilnehmer E zu erreichen.

Erfindungsgemäß wird vorgesehen, zunächst durch ein spezielles Kennzeichen in einer Provisional Response Nachricht die A-Seite dazu aufzufordern einen neuen SDP Offer/Answer Zyklus zu starten. Innerhalb dieses Offer/Answer Zyklus werden dann die SDP Daten neu verhandelt. Das spezielle Kennzeichen kann z.B. ein neu definierter Header oder ein spezieller Response Code aus dem Bereich 18x sein.

Bei Anwendung der folgenden Erweiterung des SIP Protokolls kann dem A-seitigen SIP/SIP-T Tln./Kunden das Queing/ Sequencing Leistungsmerkmal angeboten werden. Dies kann beispielhaft durch Einführung eines neuen Headers in der Provisional Response Methode erfolgen:

| | | | | | | | | | | |
|---|---|---|---|---|---|---|---|---|---|---|
| | | where | enc. | e-e | ACK | BYE | CAN | INV | OPT | REG |
| SDP offer | request | lxx | | h | - | - | - | | - | - |

Mit diesem "SDP offer request" Header wird die Partner SIP Seite aufgefordert ein neues SDP offer zu senden. Erfindungsgemäß soll dann der SIP Partner in der SIP Methode UPDATE (auch die PRACK ist hier denkbar) sein SDP offer anbieten. Daraufhin kann dann die anfordernde SIP Seite in der 200 OK die SDP Answer zurückgeben.

Falls in einem SIP Proxy oder einer anderen SIP Einheit, oder einem anderem SIP Endgerät die Notwendigkeit erkannt wird, die Bearerverbindung zu einer neuen Resource zu schalten, nachdem schon einmal ein SDP Answer vor dem 200 OK (INVITE) ausgetauscht wurde, wird der Ablauf gemäß Tabelle 4 durchgeführt.

Einleitend wird zunächst von Teilnehmer A eine Bearerverbindung zur SIP/ SIP-T Steuereinheit B aufgebaut. Während des Ablaufs der Ansage an A übergibt diese der Steuereinheit C IP Portadresse sowie weitere Informationen z. B. bezüglich CODEC von Steuereinheit A und fordert von Steuereinheit C deren IP Portadresse und CODEC Informationen. Die sich hieran anschließende Vorgehensweise ist in Tabelle 4 aufgezeigt.

**Tabelle 4**

| SIP/SIP-T | |
|---|---|
| 1xx (INVITE) SIP offer request Header, | Notwendigkeit der Umsteuerung erkannt |
| UPDATE/PRACK with SDP offer | IP Adresse und IP Port der A-Seite erhalten |
| 200 OK to UPDATE/PRACK with SDP answer | IP Adresse und IP Port des neuen B-seitigen Resource wird der A-Seite zur Verfügung gestellt |

Nach der 200 OK Quittung ist der Offer/ Answer Zyklus abgeschlossen. Gegebenfalls kann ein neuer Zyklus angestoßen werden. Nachdem die Steuereinheiten A, C IP Portadressen sowie CODEC Informationen der jeweils anderen Seite haben, ist eine neue Bearerverbindung zwischen A und C erstellt worden und die alte Bearerverbindung zwischen A und B ist ausgelöst worden. In der Steuereinheit C können nun dieselbe Methode - wie zwischen A und B beschrieben - zum Ablauf gelangen. Als Ziel wird eine weitere Bearerverbindung zwischen A und Steuereinheit D aufgebaut, wo weitere Ansagen zum Teilnehmer A übertragen werden. Letztlich wird gegebenenfalls eine Bearerverbindung zum Teilnehmer E geschaltet.

In Tabelle 5 sind die Abläufe für den Fall geschildert, dass keine reine SIP/ SIP-T Verbindungen gegeben sind sondern die Verbindungen teilweise mit Hilfe von BICC Protokollen geführt werden. In diesem Fall ist ein Mapping zwischen der SIP Welt und der BICC Welt durchzuführen.

**Tabelle 5**

| SIP/SIP-T | BICC (entsprechend der Q.1902.6, bearer redirection Prozedur) | SIP/SIP-T |
|---|---|---|
| ← 1xx (INVITE) SIP offer request Header, | ← APM Action Indicator: "Bearer Redirect" Bearer Redirect Indicators "Redirect Forwards Request" + "Redirect Bearer Release Complete" | ← 1xx (INVITE) SIP offer request Header |
| → UPDATE/PRACK with SDP offer | → APM Action Indicator: "Bearer Redirect" - Bearer Redirect Indicators: "Redirect Bearer Connected Indication" IP Address of A Side | → UPDATE/PRACK with SDP offer |
| ← 200 OK to UPDATE/PRACK with SDP answer | ← APM - Action Indicator "Connect Forward + Notification + selected Codec" IP Address of B Side | ← 200 OK to UPDATE/PRACK with SDP answer |
| | → APM - Action Indicator "Connected" | |

## Patentansprüche

1. Verfahren zum Umsteuern einer Bearerverbindung für SIP/SIP-T Steuereinheiten, zwischen denen ein Internetnetz (IP) angeordnet ist, wobei zwischen einer ersten anrufenden SIP/ SIP-T Steuereinheit (A) und einer zweiten angerufenen SIP/SIP-T Steuereinheit (B) eine erste Bearerverbindung besteht, die zu wenigstens einer weiteren SIP/ SIP-T Steuereinheit (C, D, E) umsteuerbar ist, womit eine zweite Bearerverbindung entsteht,
**dadurch gekennzeichnet,**
**dass** im Ringing Zustand von der SIP/ SIP-T angerufenen Steuereinheit (B) der ersten Bearerverbindung festgelegt wird, zu welcher weiteren SIP/ SIP-T Steuereinheit (C, D, E) diese umgesteuert werden soll,
**dass** von dieser umsteuernden SIP/ SIP-T Steuereinheit (B) über den Austausch von SIP/ SIP-T Nachrichten mit den SIP/SIP-T Steuereinheiten (A, C, D, E) der noch zu erstellenden zweiten Bearerverbindung Steuerinformationen angefordert und der jeweils anderen Seite zur Verfügung gestellt werden, woraufhin die zweite Bearerverbindung zwischen diesen SIP/ SIP-T Steuereinheiten (A, C, D, E) erstellt wird.

2. Verfahren nach Anspruch 1,
**dadurch gekennzeichnet,**
**dass** die Signalisierungsverbindungen nach dem Umsteuern der Bearerverbindung weiterhin über die umsteuernde SIP/ SIP-T Steuereinheit (B) geführt werden.

3. Verfahren nach Anspruch 1, 2,
**dadurch gekennzeichnet,**
**dass** die Steuerinformationen Informationen bezüglich der IP-Portadressen der SIP/ SIP-T Steuereinheiten (A, C, D, E) sowie Informationen der hier jeweils verwendeten Codecs sind.

4. Verfahren nach Anspruch 1 bis 3,
**dadurch gekennzeichnet,**
**dass** die SIP/ SIP-T Nachrichten als SIP/SIP-T Signalisierungselement UPDATE oder PRACK ausgebildet sind, wobei ein Informationselement (SDP Header Request) vorgesehen ist, welches die Gegenseite zum Senden seiner Steuerinformationen auffordert und womit ein neuer SDP Offer/Answer Zyklus gestartet wird.

5. Verfahren nach Anspruch 1 bis 3,
**dadurch gekennzeichnet,**
**dass** die SIP/ SIP-T Nachrichten als SIP/SIP-T Signalisierungselement PROVISIONAL RESPONSE ausgebildet sind, mit dessen Hilfe die Gegenseite zum Senden seiner Steuerinformationen aufgefordert wird und womit_ein neuer SDP Offer/Answer Zyklus gestartet wird.

6. Verfahren nach einem der vorstehenden Ansprüche,
**dadurch gekennzeichnet,**
**dass** im Falle, dass ein anderes Protokoll als das SIP/ SIP-T Protokoll zur Anwendung gelangt, die SIP/ SIP-T Nachrichten sowie Steuerinformationen in dieses Protokoll umgesetzt werden.

## Claims

1. Method for redirecting a bearer connection for SIP/ SIP-T control units, between which units an Internet network (IP) is arranged, there being a first bearer connection between a first calling SIP/ SIP-T control unit (A) and a second called SIP/SIP-T control unit (B) which bearer connection can be redirected to at least one further SIP/ SIP-T control unit (C, D, E), which results in a second bearer connection being set up,
**characterised in that**,
in the ringing state of the SIP/ SIP-T called control unit (B) of the first bearer connection is established to which further SIP/ SIP-T control unit (C, D, E) said connection is to be redirected;
control information is requested by said redirecting SIP/ SIP-T control unit (B) via the exchange of SIP/ SIP-T messages with the SIP/ SIP-T control units (A, C, D, E) of the second bearer connection that is yet to be established, and said information is made available to the respective other side, whereupon the second bearer connection is set up between said SIP/ SIP-T control units (A, C, D, E).

2. Method according to claim 1,
**characterised in that**,
the signalling connections are further routed via the redirecting SIP/ SIP-T control unit (B) after the bearer connection has been redirected.

3. Method according to claim 1, 2,
**characterised in that**,
the control information is information relating to the IP-port addresses of the SIP/ SIP-T control units (A, C, D, E) and also information about the respective Codecs used here.

4. Method according to claim 1 to 3,
**characterised in that**,
the SIP/ SIP-T messages are configured as an SIP/SIP-T signalling element UPDATE or PRACK, an information element (SDP header request) being provided, which element requests the other side to transmit control information and whereupon a new SDP offer/answer cycle is started.

5. Method according to claim 1 to 3,
**characterised in that**,
the SIP/ SIP-T messages are configured as an SIP/SIP-T signalling element PROVISIONAL RESPONSE, with the aid of which the other party is requested to transmit control information and whereupon a new SDP offer/answer cycle is started.

6. Method according to one of the preceding claims,
**characterised in that**,
in a case where a protocol other than the SIP/ SIP-T protocol is used, the SIP/ SIP-T messages and control information are converted to said protocol.

## Revendications

1. Procédé pour rediriger une connexion de support pour des unités de commande SIP/ SIP-T entre lesquelles est situé un réseau Internet (IP), une première connexion de support existant entre une première unité de commande SIP/ SIP-T (A) appelant et une seconde unité de commande SIP/ SIP-T (B) appelée, laquelle connexion de support peut être redirigée vers au moins une autre unité de commande SIP/ SIP-T (C, D, E), ce qui donne lieu à une seconde connexion de support,
**caractérisé**
**en ce que**, dans l'état "sonnerie" de l'unité de commande SIP/SIP-T (B) appelée de la première connexion de support, il est déterminé vers quelle autre unité de commande SIP/ SIP-T (C, D, E) la connexion doit être redirigée,
**en ce que** cette unité de commande SIP/ SIP-T (B) procédant à la redirection demande des informations de commande en échangeant des messages SIP/ SIP-T avec les unités de commande SIP/ SIP-T (A, C, D, E) de la seconde connexion de support qui est encore à établir et met ces informations à disposition de l'autre côté respectif, après quoi la seconde connexion de support est établie entre ces unités de commande SIP/ SIP-T (A, C, D, E).

2. Procédé selon la revendication 1,
**caractérisé en ce que**, après la redirection de la connexion de support, les connexions de signalisation continuent à être acheminées par le biais de l'unité de commande SIP/ SIP-T (B) procédant à la redirection.

3. Procédé selon la revendication 1, 2,
**caractérisé en ce que** les informations de commande sont des informations concernant les adresses de port IP des unités de commande SIP/ SIP-T (A, C, D, E) ainsi que des informations sur les codecs utilisés respectivement.

4. Procédé selon les revendications 1 à 3, **caractérisé en ce que** les messages SIP/ SIP-T sont exécutés en tant qu'élément de signalisation SIP/ SIP-T UPDATE ou PRACK, un élément d'information (SDP Header Request) qui invite le côté correspondant à envoyer ses informations de commande et grâce auquel un nouveau cycle d'offres/réponses SDP est démarré étant prévu.

5. Procédé selon les revendications 1 à 3, **caractérisé en ce que** les messages SIP/ SIP-T sont exécutés en tant qu'élément de signalisation SIP/ SIP-T PROVISIONAL RESPONSE à l'aide duquel le côté correspondant est invité à envoyer ses informations de commande et grâce auquel un nouveau cycle d'offres/réponses SDP est démarré.

6. Procédé selon l'une des revendications précédentes, **caractérisé en ce que**, en cas d'utilisation d'un autre protocole que le protocole SIP/ SIP-T, les messages SIP/ SIP-T et les informations de commande sont convertis dans ce protocole.
